# EUROPEAN PATENT APPLICATION

(11) **EP 1 296 489 A1**
(43) Date of publication of application: **26.03.2003**
(21) Application number: 02722926.9
(22) Date of filing: 01.05.2002
(51) Int. Cl.: H04L 12/56, H04L 12/66, H04Q 7/38

(54) **MOBILE COMMUNICATION SERVICE CONTROL APPARATUS AND MOBILE COMMUNICATION SERVICE CONTROL METHOD**

(30) Priority: 01.05.2001 JP 2001134520
(71) Applicant: NTT DoCoMo, Inc., Tokyo 100-6150 (JP)
(72) Inventor: NAKANISHI, Masayuki, Chiyoda-ku, Tokyo 100-6150 (JP); KOKUBUN, Yasuhiko, Chiyoda-ku, Tokyo 100-6150 (JP); OGURO, Masami, hiyoda-ku, Tokyo 100-6150 (JP); HAGIYA, Noriaki, hiyoda-ku, Tokyo 100-6150 (JP)
(74) Representative: Rees, Alexander Ellison
(86) International application number: JP0204371
(87) International publication number: WO02091686

(57) **Abstract**

A mobile communications service control apparatus comprises signal processing means for conducting prescribed signal processing of a packet transmitted from a mobile terminal or preset communications-equipment, information restoring means for restoring information of a layer higher than a transmitted layer of the signal-processed packet, and service providing means for providing a service in accordance with the contents of the restored information.

## Description

### TECHNICAL FIELD

The present invention relates to a mobile communications service control apparatus and a mobile communications service control method, which are capable of managing and controlling operations in association with providing various types of mobile communications services.

### BACKGROUND ART

In recent years, various types of mobile communications services have come to be offered over mobile communications networks. One example of such services is furnishing information on the Internet to mobile terminals. Such mobile communications services are conventionally controlled on a level of the IP layer. For example, when conducting a service of providing information on the Internet to a mobile terminal, the quantity of IP packets supplied to the mobile terminal is measured, and the service rate is calculated based on the quantity of the transmitted IP packets.

The conventional service control method cannot deal with and control those services at layers above the IP layer. Accordingly, demand for a novel service control technique that can deal with a wide variety of higher-grade mobile communications services is arising.

### SUMMARY OF THE INVENTION

Therefore, it is an object of the present invention to provide a mobile communications service control apparatus and a mobile communications service control method that can provide and manage a variety of high-grade mobile communications services.

To achieve the object, a mobile communications service control apparatus according to the present invention comprises signal processing means for conducting prescribed signal processing of a packet transmitted from a mobile terminal or preset communications-equipment; information restoring means for restoring information of a higher layer than a transmitted layer of the signal-processed packet; and service providing means for providing a service in accordance with the information restored by the information restoring means.

This mobile communications service control apparatus is capable of dealing with and providing a service, taking into account the contents of the information contained in the packet transmitted from a mobile terminal or preset communications-equipment. Consequently, a variety of high-grade services can be handled and provided over the mobile communications network.

For example, when an IP packet is transmitted from the mobile terminal or the preset communications-equipment, the mobile communications service control apparatus acquires this IP packet, and restores information associated with a layer higher than the IP layer from the IP packet, using the information restoring means.

From the same standpoint for furnishing a higher-grade mobile communications services, the service providing means has service scenario retaining means for retaining service scenarios corresponding to respective services to be provided; service scenario selection means for selecting a service scenario for the service associated with the restored information, from among the service scenarios retained in the service scenario retaining means; and service scenario implementing means for implementing the service scenario selected by the service scenario selection means.

The service providing means also has object retaining means for retaining objects that are processed when implementing the service scenarios for the respective services to be provided; and object selection means for selecting an object corresponding to the selected service scenario, from among the objects retained in the object retaining means, when implementing the selected service scenario. The service scenario implementing means implements the service scenario by processing the object selected by the object selection means.

From a viewpoint of facilitating the adding or the changing of services to be offered by the service provider, the mobile communications service control apparatus further comprises service scenario producing means for producing a service scenario for a service to be provided. In this case, the service scenario retaining means retains the service scenario produced by the service scenario producing means.

In another aspect of the present invention, a mobile communications service control apparatus comprises gateway equipment, service processing equipment, and service management equipment that manages the gateway equipment and the service processing equipment. The gateway equipment has signal processing means for conducting prescribed signal processing of a packet transmitted from a mobile terminal or preset communications-equipment. The service processing equipment has information restoring means for restoring information of a higher layer than a transmitted layer of the signal-processed packet, and service providing means for providing a service in accordance with the contents of the information restored by the information restoring means.

In this mobile communications service control apparatus, when an IP packet is transmitted from the mobile terminal or the communications-equipment, the information of a layer higher than the IP layer of the IP packet is restored by the information restoring means.

The service providing means of this mobile communications service control apparatus includes service scenario retaining means for retaining service scenarios corresponding to respective services to be provided; service scenario selection means for selecting a service scenario for the service associated with the restored information from among the service scenarios retained in the service scenario retaining means; and service scenario implementing means for implementing the service scenario selected by the service scenario selection means.

The service providing means also includes object retaining means for retaining objects that are processed when implementing the service scenarios for the respective services to be provided; and object-selection means for selecting an object corresponding to the selected service scenario from among the objects retained in the object retaining means when implementing the selected service scenario. The service scenario implementing means implements the service scenario by processing the object selected by the object selection means.

In the mobile communications service control apparatus, the service management equipment has service scenario producing means for producing a service scenario corresponding to a service to be provided. In this case, the service scenario retaining means retains the service scenario produced by the service scenario producing means.

This mobile communications service control apparatus is built outside the core network.

In general, it is difficult to add a new function to the core network or to change the existing configuration because the core network is standardized. To overcome this problem, the mobile communications service control apparatus is arranged outside the core network, so as to allow service providers to add or change services without changing the existing core network.

In still another aspect of the invention, a mobile communications service control method is provided. In this method, prescribed signal processing is carried out for a packet transmitted from a mobile terminal or preset communications-equipment. Then, information of a higher layer than a transmitted layer of the signal-processed packet is restored. Then, a service complying with the contents of the restored information is provided.

For example, when an IP packet is transmitted from the mobile terminal or the preset communications-equipment, information loaded on a layer above the IP layer of the signal-processed IP packet is restored.

In this method, service scenarios are retained for the respective services to be provided, and a service scenario is selected for the service complying with the contents of the restored information, from among the retained service scenarios. The selected service scenario is implemented to provide the service.

Furthermore, objects that are to be processed when implementing the service scenarios for the respective services are retained. An object corresponding to the selected service scenario is selected from among the retained objects, and the selected object is processed to implement the selected service scenario.

A service scenario is produced for each service to be provided, and the produced service scenario is retained to be used when providing the corresponding service.

In yet another aspect of the invention, a mobile communications service control method is performed in a mobile communications service control apparatus comprised of gateway equipment, service processing equipment, and service management equipment that manages the gateway equipment and the service processing equipment. In this mobile communications service control method, prescribed signal processing is carried out in the gateway equipment for a packet transmitted from a mobile terminal or preset communications-equipment. In the service processing equipment, information of a higher layer than a transmitted layer of the signal-processed packet is restored, and a service complying with the contents of the restored information is provided.

For example, when an IP packet is transmitted from the mobile terminal or the communications-equipment, information of a layer higher than the IP layer is restored from the IP packet, by the service processing equipment.

In this method, service scenarios corresponding to the respective services to be provided are retained in the service processing equipment. From among the retained service scenarios, a service scenario for the service complying with the contents of the restored information is selected, and the selected service scenario is implemented by the service processing equipment.

Furthermore, objects, which are to be processed when implementing the service scenarios for the respective services, are retained in the service processing equipment. An object associated with the selected service scenario is selected from among the retained objects, and the selected object is executed by the service processing equipment to implement the selected service scenario.

A service scenario is produced by the service management equipment, in association with each service to be provided. The produced service scenario is retained in the service processing equipment.

Other objects, features, and advantages of the invention will become more apparent from the following detailed description when read in conjunction with the accompanying drawings.

### BRIEF DESCRIPTION OF THE DRAWINGS

FIG. 1 illustrates an example of a mobile communications service control apparatus;
FIG. 2 illustrates structural examples of the MSA and the MSM shown in FIG. 1;
FIG. 3 illustrates an example of the operational sequence of providing a flexible charging service;
FIG. 4 illustrates an example of the operational sequence of providing a location information service;
FIG. 5 illustrates an example of the operational sequence of providing a video/music distribution service; and
Fig. 6 illustrates an example of the operational sequence of providing a prepaid-type charging service.

### BEST MODE TO CARRY OUT THE INVENTION

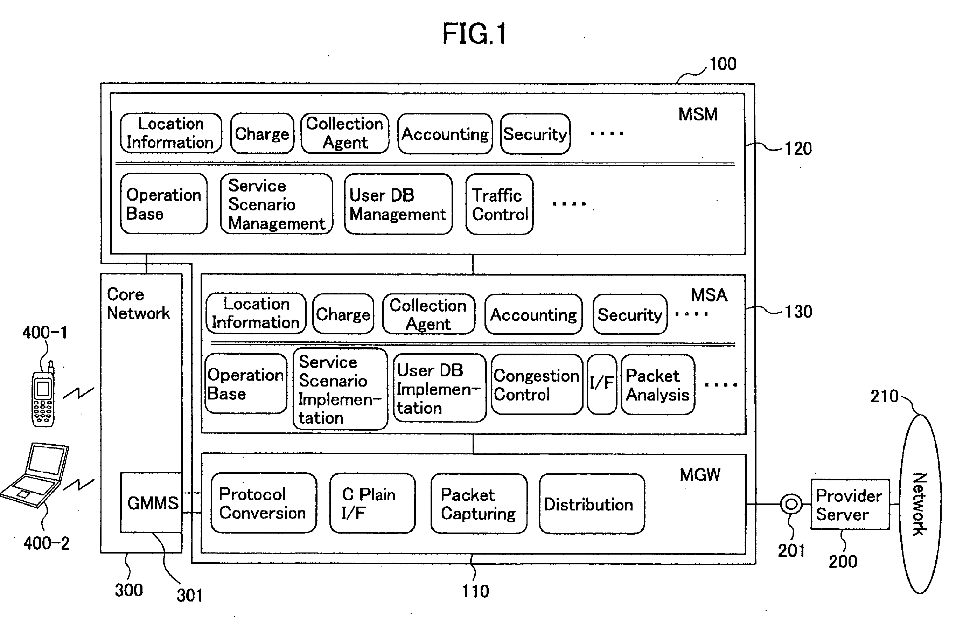

The details of the preferred embodiments of the present invention will now be described with reference to the attached drawings. FIG. 1 illustrates a concept of the mobile communications service control apparatus according to an embodiment of the invention.

The mobile communications service control apparatus 100 implements functions required for providing various types of services, such as location information service for positioning a mobile terminal, or charging service for dealing with a variety of charging processes.

To be more precise, the mobile communications service control apparatus 100 receives IP packets transmitted from mobile terminals 400-1 and 400-2 (which are collectively referred to as a "mobile terminal 400" as necessary) via the core network 300, as well as an IP packet transmitted from a provider server 200 connected to the Internet 210. The provider server 200 includes, for example, servers of Internet service providers (ISP), servers of application service providers (ASP), and servers of content providers (CP). The mobile communications service control apparatus 100 restores information associated with a higher layer than the layer of the IP packet (that is, the IP layer), from the received IP packet, and provides a service in accordance with the contents of the restored information.

The mobile communications service control apparatus 100 is built outside the core network 300, and is comprised of gateway equipment (MGW) 110 with a gateway function, service management equipment (MSM) 120, and service processing equipment (MSA) 130 that implements a variety of service processing functions.

The MGW 110 has service control information required to implement protocol-converted wideband access and other processes, for the purpose of diversifying connection forms and achieving high-speed services with improved quality. The MGW 110 implements a packet capturing function, and it acquires an IP packet transmitted from the provider server 200 via the point of interface (POI), as well as IP packets transmitted from the mobile terminals 400-1 and 400-2, via the core network 300 and the gateway switch (GMMS) 301. The MGW 110 transmits the acquired IP packets to the MSA 130.

The MGW 110 also carries out protocol conversion between the network for the provider server 200 and the network for the mobile terminal 400.

The MGW 110 has a C plain interface (IF) function for converting the control data transmitted from the network for the provider server 200 into an appropriate format suitable to the network for the mobile terminal 400, prior to transmitting the control data to the network for the mobile terminal 400. Similarly, the C plain interface function converts the control data transmitted from the network for the mobile terminals 400 into an appropriate format suitable to the network for the provider server 200, prior to transmitting the control data to the network for the provider server 200. The MGW 110 also has a distribution function for distributing the IP packet transmitted from the provider server 200 to either the mobile terminal 400-1 or 400-2 (which is the destination of the communication), and for distributing the IP packet transmitted from the mobile terminals 400-1 and 400-2 to one of the provider servers 200 as the destination of the communication.

The MSM 120 is connected with the core network 300, and retains service management information used to manage and control the gateway function of the MGW 110 and a service processing function of the MSA 130, in cooperation with the core network 300.

The MSM 120 implements functions of an operations base for controlling the entire operation of the MSM 120, service scenario management for producing and managing the service scenario, which is to be implemented by the MSA 130, user database (DB) management for managing the user database (DB) used by the MSA 130 when implementing the service scenario, traffic control for controlling the traffic of the mobile communications service control apparatus 100, and so on.

Based on these functions, the MSM 120 manages various services, such as location information service, charging service, collection agent service, accounting service, and security service, which are executed and provided by the MSA 130.

The MSA 130 retains service objects required to provide the respective services making use of the gateway function of the MGW 110. The MSA 130 executes a necessary service object when carrying out the corresponding service. The MSA 130 implements functions of the operations base for controlling the entire operation of the MSA 130, congestion control for controlling the congestion of the IP packets supplied from the MGW 110, service scenario implementation for implementing the service scenario, user database (DB) implementation referring to the user database (DB) when implementing the service scenario, interface (IF) for controlling the interface with the MGW 110 and the charging system (not shown), and packet analysis for restoring information of a layer higher than the IP layer of the IP packet supplied from the MGW 110.

Based on these functions, the MSA 130 provides the various services, including the location information service, charging service, collection agent service, accounting service, and security service, in accordance with the contents of the restored information of the above-IP layers. These services are all managed by the MSM 120.

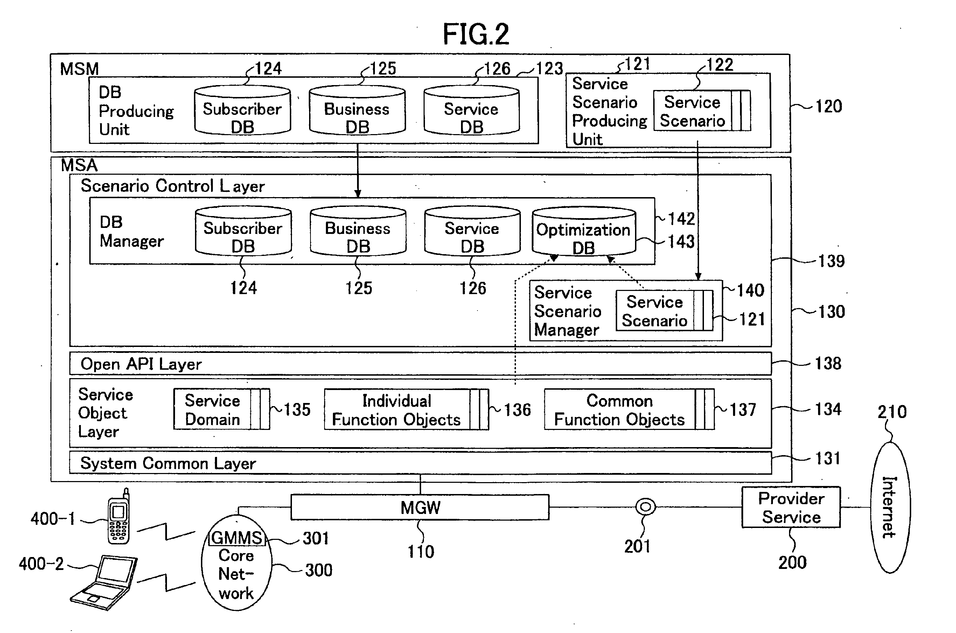

FIG. 2 illustrates structural examples of the MSM 120 and the MSA 130. As illustrated in this diagram, the MSM 120 has a service scenario producing unit 121, and a database (DB) producing unit 123.

The service scenario producing unit 121 produces and manages service scenarios 122 for the respective services to be provided. The service scenario producing unit 121 supplies the produced service scenarios 122 to the MSA 130. Every time a service is added or changed by the service provider, the service scenario producing unit 121 produces a service scenario for the service to be added or changed, and supplies the newly produced service scenario to the MSA 130.

The DB producing unit 123 produces and manages a subscriber database (DB) 124 storing information about the subscribers of the mobile terminals 400, a business database (DB) 125 storing information about the providers managing the provider servers 200, and a service database (DB) 126 storing information about the services to be provided. The DB producing unit 123 supplies each of the databases to the MSA 130. Every time any changes are made to the subscriber DB 124, the business DB 125, or the service DB 126, the DB producing unit 123 supplies the differential data to the MSA 130.

On the other hand, the MSA 130 comprises a system common layer 131, a service object layer 134, an Open API layer 138, and a scenario control layer 139.

The system common layer 131 implements functions of the operations base for controlling the entire operation of the MSA 130, and congestion control for controlling the congestion of the IP packets transmitted from the MGW 110.

The system common layer 131 also implements functions of service scenario implementation for implementing the service scenario, user database (DB) implementation for making use of the user database when implementing the service scenario, and interface (IF) for controlling the interface with the MGW 110 and the charging system.

The system common layer 131 further implements a function of packet analysis for restoring information of a layer higher than the IP layer, of the IP packet supplied from the MGW 110.

The service object layer 134 has definition information (i.e., service domain) 135 of each service to be provided, as well as individual function objects 136, which is a program module individually executed for each service scenarios, and common function objects 137, which is a program module executed in common when implementing the respective service scenarios. Among these elements, the service domain 135 and the individual function objects 136 are produced in response to the service scenario supplied from the MSM 120, which are then maintained in the service object layer 134.

The scenario control layer 139 has a service scenario manager 140 and the database (DB) manager 142.

The service scenario manager 140 maintains the service scenarios 122 supplied from the MSM 120. The DB manager 142 has a subscriber DB 124, a business DB 125, and a service DB 126, which are also supplied from the MSM 120.

The DB manager 142 also has an optimization database (DB) 143, which stores information that represents which data, among the subscriber DB 124, the business DB 125, and the service DB 126, are used to implement the service scenario. The scenario control layer 139 produces the optimization DB 143, based on the service scenario retained by the service scenario manager 140 and on the service domain maintained in the service object layer 134.

Next, a general process will be explained, from acquisition of the IP packet from the MGW 110 at the MSA 130 through implementation of the service scenario. The system common layer 131 acquires an IP packet supplied from the MGW 110, and restores information of a layer higher than the IP layer of the acquired IP packet.

The scenario control layer 139 identifies the contents of the information restored by the system common layer 131. Then, the scenario control layer 139 selects a service scenario in accordance with the contents of the restored information from among the service scenarios 121 maintained in the service scenario manager 140. Simultaneously, the scenario control layer 139 selects the optimization DB 143 corresponding to the selected service scenario.

The service object layer 134 selects an individual function object, which is to be executed when implementing the service scenario selected by the scenario control layer 139, from among the individual function objects 136 retained in this layer.

The system common layer 131 reads necessary data out of the subscriber DB 124, the business DB 125, and the service DB 126, based on the description of the optimization DB 143 selected by the scenario control layer 139. Then, the system common layer 131 executes the individual function object selected by the service object layer 134, as well as the common function object 137 maintained in the service object layer 134, to implement the service scenario selected by the scenario control layer 139.

Alternatively, the MSA 130 may implement the service scenario without using the optimization DB 143. In this case, the scenario control layer 139 identifies the contents of the information restored by the system common layer 131, and selects a service scenario complying with the contents of the identified information from among the service scenarios 121 maintained by the service scenario manager 140. Then, the service object layer 134 selects an individual function object, which is to be executed to implement the service scenario selected by the scenario control layer 139, from among the individual function objects 136 retained in the service object layer 134. The system common layer 131 reads necessary data out of the subscriber DB 124, the business DB 125, and the service DB 126, and implements the service scenario selected by the scenario control layer 139 by executing the individual function object selected by the service object layer 134 and the common function objects 137 maintained in the service object layer 134.

By performing the above-described sequence of processes, the MSA 130 provides a service in accordance with the contents of the information restored from the IP packet, which information is associated with a layer above the IP layer.

Next, operations of the mobile communications service control apparatus 100 will be explained using some service examples.

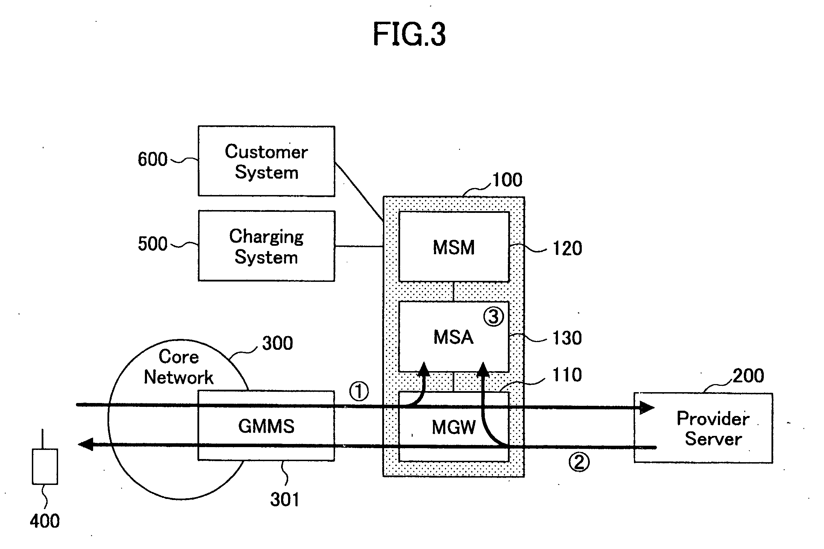

FIG. 3 illustrates an example of the operational sequence for providing a flexible charging service. The mobile terminal 400 transmits an IP packet of a contents request to the provider server 200 (Process ①).

The provider server 200 transmits an IP of a contents response, which contains the requested contents, information about the type of the contents, and information about the customer to be charged (Process ②).

The MGW 110 acquires the IP packets of the contents request and the contents response transmitted from the mobile terminal 400 and the provider server 200, respectively. The MGW 110 measures the quantities of the transmitted IP packets, and outputs the measurement result to the MSA 130. Also, the MGW 110 restores the contents response from the IP packet transmitted from the provider server 200.

Based on the information about the customer to be charged and other information contained in the restored contents response, the MSA 130 selects an appropriate charging rule used to calculate a communication rate for the customer, from among the charging rules stored in the database produced and managed by the MSM 120. Then, the MSA 130 calculates a communication rate complying with the quantity of the IP packets of the contents request and the quantity of the IP packets of the contents response, based on the selected charging rule (Process ③).

The MSA 130 also selects a charging rule used to calculate a communication rate for the requested contents, from among the charging rules produced and managed by the MSM 120, based on the information about the type of contents and other information contained in the contents response. Then, the MSA 130 calculats the contents rate, based on the selected charging rule (Process ③).

The communication rate and the contents rate are supplied to the charging system 500. The charging system 500 carries out a charging process, in cooperation with the customer system 600 that manages the customer information.

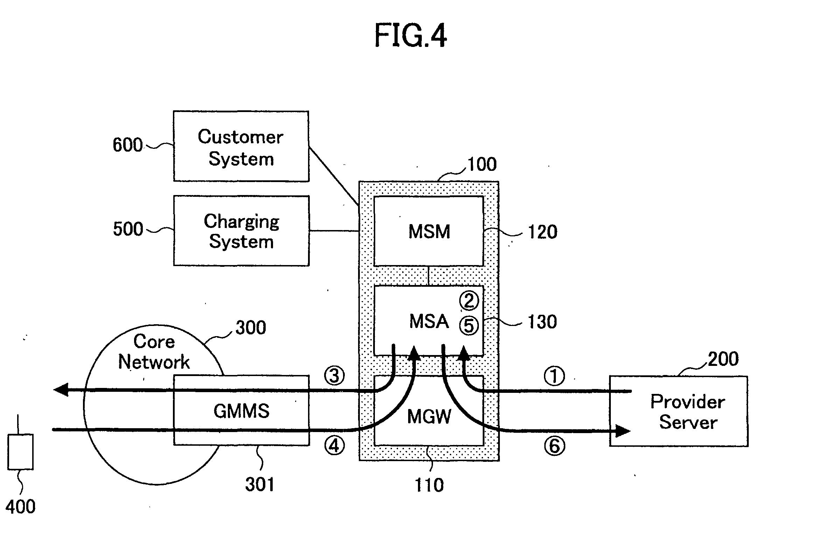

FIG. 4 illustrates an example of the operational sequence for providing a location information service. The provider server 200 transmits an IP packet of a positioning request, which contains the user ID and authentication password given to the provider server 200, as well as the attribute (e.g., the longitude, the latitude, the address, etc.) of the positioning information, information about the customer to be charged, and ID information of the mobile terminal 400 whose position needs to be known (Process ①).

The MGW 110 acquires the IP packet transmitted from the provider server 200, and restores the positioning request from this IP packet. The MSA 130 authenticates the provider server 200 based on the user ID and the password contained in the restored positioning request (Process ②). After the authentication, the MSA 130 outputs the positioning request. The MGW 110 transmits the IP packet of this positioning request to a positioning apparatus (not shown) furnished in the core network 300 (Process ③).

The positioning apparatus in the core network 300 measures the current position of the mobile terminal 400, which is the target of the measurement, and transmits an IP packet representing the measurement result (Process ④).

The MGW 110 acquires the IP packet transmitted from the positioning apparatus, and restores the measurement result from the acquired IP packet. The MSA 130 carries out an appropriate conversion process to the measurement result, for example, converting the longitude and the latitude contained in the measurement result into the address, based on the attribute of the positioning information contained in the positioning request transmitted from the provider server 200 (Process ⑤). Then, the converted measurement result is transmitted to the provider server 200 (Process ⑥).

Based on the information about the customer to be charged and other information contained in the restored positioning request from the provider server 200, the MSA 130 selects a charging rule for calculating the communication rate from among the charging rules stored in the database produced and managed by the MSM 120. The MSA 130 then calculates the positioning rate according to the selected charging rule (Process ⑤). The calculated positioning rate is supplied to the charging system 500. The charging system 500 carries out a charging process, in cooperation with the customer system 600.

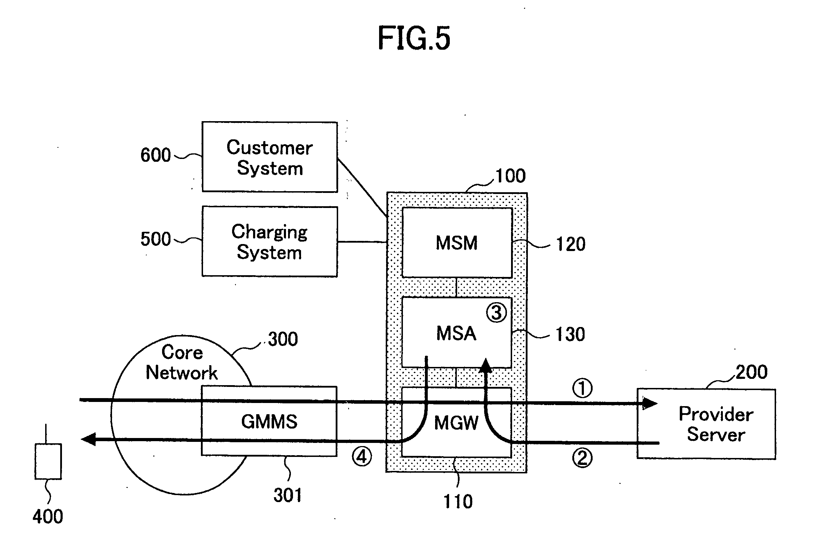

FIG. 5 illustrates an example of the operational sequence for providing a video/music distribution service. The mobile terminal 400 transmits an IP packet of a contents request to the provider server 200 (Process ①).

In response to the contents request from the mobile terminal 400, the provider server 200 transmits an IP packet of contents response, which contains the contents ID information, information about the destination of the contents, information about the customer to be charged, and so on (Process ②).

The MGW 110 acquires the IP packet transmitted from the provider server 200, and restores the contents response from the acquired IP packet.

The MSA 130 carries out authentication based on the information about the destination of the contents contained in the restored contents response. Then, the MSA 130 reads the contents to be distributed from the builtin cache memory (not shown), based on the contents ID information contained in the restored contents response. The MSA 130 outputs the contents read out of the cache memory at an appropriate timing, taking into account the conditions of the core network 300, toward the mobile terminal 400 designated by the destination of the contents contained in the contents response (Process ③). The MGW 110 transmits the IP packet containing the requested contents to the mobile terminal 400, which is the destination of the contents (Process ④).

Based on the information about the customer to be charged and other information contained in the restored contents response, the MSA 130 selects a charging rule for calculating a communication rate, from among the charging rules stored in the database produced and managed by the MSM 120. The MSA 130 then calculates a contents rate based on the selected charging rule (Process ③).

The calculated contents rate is supplied to the charging system 500. The charging system 500 carries out a charging process, in cooperation with the customer system 600 that manages the customer information.

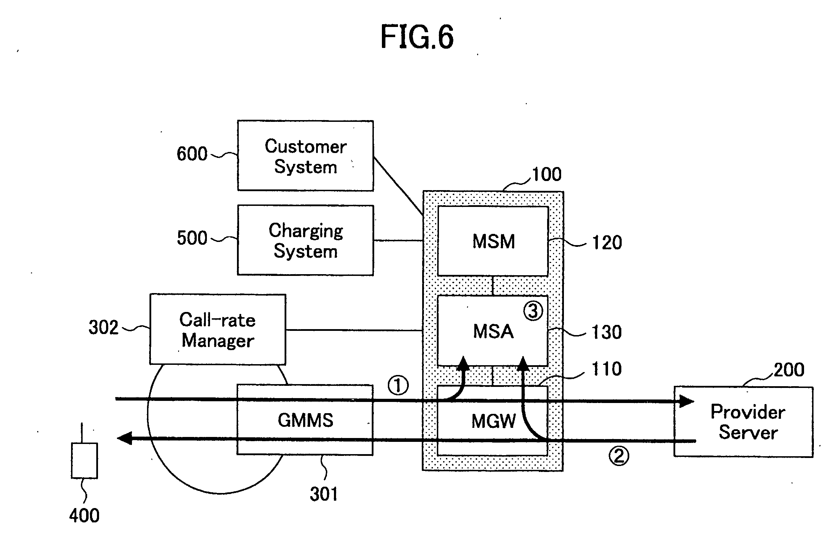

FIG. 6 illustrates an example of the operational sequence for providing a prepaid-type charging service. The mobile terminal 400 transmits an IP packet containing prescribed information, such as information about the source (or the transmitting) device, to the provider server 200 (Process ①).

Upon receiving the IP packet from the mobile terminal 400, the provider server 200 transmits an IP packet containing the prescribed information, such as information about the destination (or receiving) device, in response to the contents of the information presented in the IP packet from the mobile terminal 400 (Process ②).

The MGW 110 acquires the IP packet transmitted from the mobile terminal 400 to the provider server 200, and the IP packet transmitted from the provider 200 to the mobile terminal 200. The MGW 110 measures the quantities of the transmitted IP packets, and outputs the measurement result to the MSA 130. The MGW 110 also restores the information from the acquired IP packet.

Based on the information about the source and the destination contained in the restored information, the MSA 130 reads the call-rate information about the currently communicating mobile terminal 400 out of the call-rate storage managed by the call-rate manager 302. At the same time, the MSA 130 selects a charging rule for calculating the communication rate, from among the charging rules stored in the database produced and managed by the MSM 120. The MSA 130 calculates a call-rate corresponding to the quantity of the transmitted IP packets, based on the selected charging rule, and determines the balance (or the remainder) by subtracting the calculated call-rate from the latest call-rate read out of the call-rate manager 302 (Process ③). The balance of the call-rate is supplied to and managed by the call-rate manager 302.

If the balance (i.e., the subtraction result) is zero, the MSA 130 instructs the MGW 110 to disconnect the link. The MGW 110 cuts off the link between the mobile terminal 400 and the provider server 200 in accordance with the instruction by the MSA 130.

In the mobile communications service control apparatus 100 according to the embodiment, the MGW 110 acquires an IP packet transmitted from the provider server 200 and an IP packet transmitted from the mobile terminal 400 via the core network 300. The MSA 130 restores the information of a higher layer than the IP layer from the acquired IP packet to identify the contents of the information of the higher layer. The MSA 130 selects and implements a service scenario complying with the contents of the identified information. In this manner, a service is provided in accordance with the contents of the information transmitted from the provider server 200 or the mobile terminal 400. Consequently, a variety of high-grade services can be provided over the mobile communications network.

Since the mobile communications service control apparatus 100 is constructed outside the core network 300, the service providers can add or change services without affecting the core network 300.

In the embodiment, the functions of packet capturing, protocol conversion, C plain interface, and distribution implemented by the MGW 110 correspond to the signal processing means. The packet analysis of the system common layer 131 of the MSA 130 corresponds to the information restoring means. The function of providing a variety of services, on the basis of the operations base, congestion control, implementation of service scenarios, implementation of the user DB, interfacing, and packet analysis in the system common layer 131 of the MSA 130, corresponds to the service providing means.

Retaining service scenarios 121 in the service scenario manager 140 in the scenario control layer 139 of the MSA 130 corresponds to the service scenario retaining means. Selection of a service scenario by the scenario control layer 139 corresponds to the service scenario selection means. Implementation of a service scenario by the system common layer 131 of the MSA 130 corresponds to the service scenario implementing means. Retention and selection of individual function objects 136 in the service object layer 134 of the MSA 130 correspond to the object retaining means and the object selection means, respectively.

Producing a service scenario by the service scenario producing unit 121 of the MSM 120 corresponds to the service scenario producing means.

As has been described above, according to the present invention, a service is provided in compliance with the contents of information transmitted from a mobile terminal or preset communications-equipment. Accordingly, a variety of high-grade services can be provided on the mobile communications networks.

In addition, because the mobile communications service control apparatus is established outside the core network, service providers can add or change their services easily, without changing the core network.

## Claims

1. A mobile communications service control apparatus comprising:
signal processing means for conducting prescribed signal processing of a packet transmitted from a mobile terminal or a preset communications-equipment;
information restoring means for restoring information of a layer higher than a transmitted layer of the signal-processed packet; and
service providing means for providing a service in accordance with the contents of the restored information.

2. The mobile communications service control apparatus of claim 1, wherein when an IP packet is transmitted from the mobile terminal or the preset communications-equipment, the information restoring means restores the information of the layer higher than an IP layer from the IP packet.

3. The mobile communications service control apparatus of claim 1 or 2, wherein the service providing means includes:
service scenario retaining means for retaining a plurality of service scenarios corresponding to respective services to be provided;
service scenario selection means for selecting the service scenario corresponding to said service in accordance with the contents of the restored information, from among the service scenarios retained in the service scenario retaining means; and
service scenario implementing means for implementing the service scenario selected by the service scenario selection means.

4. The mobile communication service control apparatus of claim 3, wherein the service providing means further includes:
object retaining means for retaining a plurality of objects that are to be executed when implementing the service scenarios for the respective services to be provided; and
object selection means for selecting the object corresponding to said service scenario selected by the service scenario selection means, from among the objects retained in the object retaining means;
wherein the service scenario implementing means implements the service scenario by executing the object selected by the object selection means.

5. The mobile communication service control apparatus of claim 3 or 4, further comprising service scenario producing means for producing the service scenario for the service to be provided, wherein the service scenario retaining means retains the service scenario produced by the service scenario producing means.

6. A mobile communication service control apparatus comprising gateway equipment, service processing equipment, and service management equipment that manages the gateway equipment and the service processing equipment, wherein the gateway equipment has signal processing means for conducting prescribed signal processing of a packet transmitted from a mobile terminal or preset communications-equipment, said service processing equipment comprising:
information restoring means for restoring information of a layer higher than a transmitted layer of the signal-processed packet; and
service providing means for providing a service in accordance with the contents of the information restored by the information restoring means.

7. The mobile communications service control apparatus of claim 6, wherein when an IP packet is transmitted from the mobile terminal or the preset communications-equipment, the information restoring means restores the information of the layer higher than an IP layer of the IP packet.

8. The mobile communications service control apparatus of claim 6 or 7, wherein the service providing means includes:
a service scenario retaining means for retaining a plurality of service scenarios corresponding to respective services to be provided;
service scenario selection means for selecting the service scenario corresponding to said service in accordance with the contents of the restored information, from among the service scenarios retained in the service scenario retaining means; and
service scenario implementing means for implementing the service scenario selected by the service scenario selection means.

9. The mobile communication service control apparatus of claim 8, wherein the service providing means further includes:
object retaining means for retaining a plurality of objects that are to be executed when implementing the service scenarios for the respective services to be provided; and
object selection means for selecting the object corresponding to said service scenario selected by the service scenario selection means from among the objects retained in the object retaining means; wherein the service scenario implementing means implements the service scenario by executing the object selected by the object selection means.

10. The mobile communication service control apparatus of claim 8 or 9, wherein the service management equipment has service scenario producing means for producing the service scenario for the service to be provided, and the service scenario retaining means of the service processing equipment retains the service scenario produced by the service scenario producing means.

11. The mobile communication service control apparatus of any one of claims 1 through 10, wherein the mobile communications service control apparatus is built outside a core network.

12. A mobile communications service control method comprising:
conducting prescribed signal processing of a packet transmitted from a mobile terminal or preset communications-equipment;
restoring information of a layer higher than a transmitted layer of the signal-processed packet; and
providing a service in accordance with the contents of the restored information.

13. The mobile communications service control method of claim 12, wherein when an IP packet is transmitted from the mobile terminal or the preset communications-equipment, the information of the layer higher than an IP layer of the IP packet is restored.

14. The mobile communications service control method of claim 12 or 13, further comprising:
retaining a plurality of service scenarios corresponding to respective services to be provided;
selecting the service scenario for said service in accordance with the contents of the restored information; and
implementing the selected service scenario.

15. The mobile communications service control method of claim 14, further comprising:
retaining a plurality of objects that are to be processed when implementing the service scenarios for the respective services to be provided;
selecting the object associated with the selected service scenario from among the retained objects; and
processing the selected object to implement the selected service scenario.

16. The mobile communications service control method of claim 14 or 15, further comprising:
producing the service scenario for the service to be provided; and
retaining the produced service scenario.

17. A mobile communications service control method performed in a mobile communications service control apparatus comprised of gateway equipment, service processing equipment, and service management equipment that manages the gateway equipment and the service processing equipment, the method comprising:
in the gateway equipment, conducting equipment prescribed signal processing of a packet transmitted from a mobile terminal or preset communications-equipment;
in the service processing equipment, restoring information of a layer higher than a transmitted layer of the signal-processed packet; and
providing a service in accordance with the contents of the restored information, by means of the service processing equipment.

18. The mobile communications service control method of claim 17, wherein when an IP packet is transmitted from the mobile terminal or the preset communications-equipment, the information of the layer higher than an IP layer of the IP packet is restored in the service processing equipment.

19. The mobile communications service control method of claim 17 or 18, further comprising:
in the service processing equipment, retaining a plurality of service scenarios corresponding to respective services to be provided;
in the service processing equipment, selecting the service scenario for said service in accordance with the contents of the restored information; and
implementing the selected service scenario by means of the service processing equipment.

20. The mobile communications service control method of claim 19, further comprising:
in the service processing equipment, retaining a plurality of objects that are to be processed when implementing the service scenarios for the respective services to be provided;
in the service processing equipment, selecting the object associated with the selected service scenario from among the retained objects; and
processing the selected object to implement the selected service scenario by means of the service processing equipment.

21. The mobile communications service control method of claim 19 or 20, further comprising:
in the service management equipment, producing the service scenario for the service to be provided; and
in the service processing equipment, retaining the produced service scenario.
